Europäisches Patentamt

European Patent Office

Office européen des brevets

(19)

(11) Veröffentlichungsnummer: **0 035 721**
**B1**

(12)     **EUROPÄISCHE PATENTSCHRIFT**

(45) Veröffentlichungstag der Patentschrift:
29.05.85

(21) Anmeldenummer: **81101458.8**

(22) Anmeldetag: **28.02.81**

(51) Int. Cl.⁴: **F 24 D 11/02, F 24 J 3/00**

(54) Wärmerückgewinnungsanlage für Gebäude.

(30) Priorität: 04.03.80 DE 3008630

(43) Veröffentlichungstag der Anmeldung:
16.09.81 Patentblatt 81/37

(45) Bekanntmachung des Hinweises auf die Patenterteilung:
29.05.85 Patentblatt 85/22

(84) Benannte Vertragsstaaten:
AT BE CH FR GB IT LI LU NL SE

(56) Entgegenhaltungen:
DE - A - 2 359 196
DE - A - 2 605 117
DE - B - 2 602 479
FR - A - 2 400 162
FR - A - 2 414 694
FR - A - 2 420 724
FR - A - 2 438 718

(73) Patentinhaber: Saalfeld, Walther, Elmwarteweg 27 a,
D-3305 Erkerode (DE)

(72) Erfinder: Saalfeld, Walther, Elmwarteweg 27 a,
D-3305 Erkerode (DE)

(74) Vertreter: Lins, Edgar, Dipl.-Phys. et al, Patentanwälte
Gramm + Lins Theodor-Heuss-Strasse 2,
D-3300 Braunschweig (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Wärmerückgewinnungsanlage für Gebäude mit einem durch zwei Schalen einer Außenwand bzw. eines Dachaufbaus gebildeten Zwischenraum, der über eine Luftzuführleitung mit dem Verdampfer einer Wärmepumpe in Verbindung steht, wobei eine Luftausgangsleitung vom Verdampfer der Wärmepumpe in den Zwischenraum zurückführt und zwischen Verdampfer und Zwischenraum ein geschlossener Kreislauf besteht.

In Anbetracht der immer knapper werdenden natürlichen, bisher traditionell genutzten Energiequellen sind in den letzten Jahren Heizsysteme ins Gespräch gekommen, die durch das Prinzip der Wärmerückgewinnung den Wärmeinhalt physikalischer Aggregatzustände ausnutzen und daher teilweise die traditionellen Energiequellen substituieren sollen. Kernstück dieser Energiegewinnungsverfahren stellt die Wärmepumpe dar, deren Verfahrensweise nach vorherrschender Meinung als energiesparend und umweltfreundlich gilt. So sind Wärmerückgewinnungsheizsysteme in Verbindung mit Wärmepumpen bereits in vielfältiger Form bekannt. Bei der Anwendung dieser Systeme für den Hausbau, insbesondere für die Verwertung der von den Gebäudemauerwerken (Schalen) abgegebenen Wärmemengen ist man bisher so vorgegangen, daß ein zweischaliges Mauerwerk (Sandwichbauweise) errichtet wurde. Dabei wurde zwischen der äußeren und inneren Schale eine innenliegende Wärmedämmschicht eingebracht. Zur Energiegewinnung wurde der äußeren Schale Wärme entzogen und der inneren Schale Wärme über eine Wärmepumpe wieder zugeführt. Der Nachteil bei diesem Energiegewinnungssystem liegt darin, daß die Temperatur in der Außenschale sehr stark abgesenkt wird und daher ein erhöhter Wärmefluß von innen nach außen feststellbar ist. Die abfallende Außentemperatur hat zur Folge, daß die Wärmepumpe mit einem relativ schlechten Wirkungsgrad arbeitet. Eine Wärmerückgewinnung der irreversiblen Verluste der durch Fenster und Türen entweichenden Wärmemengen und eine Rückgewinnung der Lüftungsverluste ist hierbei nicht möglich.

Durch die DE-A-2 359 196 ist eine Wärmerückgewinnungsanlage gemäß der eingangs erwähnten Art bekannt. Vor die Außenwand eines Wohnhauses ist eine Fassade gesetzt, die mit der Außenwand einen Zwischenraum bildet, in dem Luft zirkulieren kann. Der Zwischenraum steht mit entsprechend gebildeten Zwischenräumen der Bodenplatte des Gehäuses und des Dachaufbaus in Verbindung und bildet einen Kreislauf. In dem Kreislauf befindet sich ein Wärmetauscher einer Wärmepumpe. Die Anlage soll dazu dienen, durch die Außenwand tretende Transmissionswärmeverluste in die Luft aufzunehmen und über die Wärmepumpe zurückzugewinnen. Es hat sich jedoch gezeigt, daß ein derartiges System nicht zu diesem Zweck geeignet ist. Eine den apparativen Aufwand rechtfertigende Wärmerückgewinnung konnte nicht erzielt werden.

Der Erfindung liegt demgegenüber die Aufgabe zugrunde, eine Wärmerückgewinnungsanlage der eingangs erwähnten Art zu erstellen, die nach dem Prinzip der Rückgewinnung der Transmissionswärmeverluste arbeitet und einen hohen Wirkungsgrad aufweist, so daß eine praktische Anwendung sinnvoll möglich ist. Diese Aufgabe wird erfindungsgemäß dadurch gelöst, daß auf die Außenschale eine erste, zur Innenschale zeigende Wärmedämmschicht und auf die Innenschale eine zweite, zur Außenschale zeigende Wärmedämmschicht aufgebracht ist.

Der Erfinder hat erkannt, daß es entscheidend darauf ankommt, den Zwischenraum zwischen den beiden Schalen der Außenwand beidseitig zu isolieren. Diese Maßnahme ist ungewöhnlich, weil üblicherweise bei einer doppelschaligen Außenwand nur eine Isolierschicht auf der Außenseite der Innenschale aufgebracht wird.

Durch die FR-A-2 438 718 ist es an sich bekannt, ein Mauerwerk mit einer isolierenden Wärmedämmschicht zu versehen. Dieser Entgegenhaltung ist jedoch kein Hinweis darauf zu entnehmen, bei einem zweischaligen Mauerwerk beide Schalen innen mit einer Isolierung zu versehen.

Das Aufbringen der Wärmedämmschichten auf beide Schalen der Außenwand ist aber die entscheidende Voraussetzung für das Funktionieren der Wärmerückgewinnungsanlage.

Eine wesentliche Fertigungsvereinfachung für den erfindungsgemäßen Aufbau läßt sich dadurch erzielen, daß als Wärmedämmschicht aus Schaumstoff vorgefertigte Wärmedämmkörper verwendet werden, die eine innere und äußere Wärmedämmschicht und einen Lüftungsquerschnitt für die Luftführung besitzen.

Es ist möglich, die in einem Wohnhaus erforderlichen Fenster in den geschlossenen Kreislauf zwischen Zwischenraum und Wärmepumpe zu integrieren, wobei die Fenster jeweils aus zwei einzelnen gleichartigen Isolierglasfenstern bestehen und ein an den Seiten geschlossenes Rechteck bilden, wobei der Luftzwischenraum einen ähnlichen Querschnitt wie der Zwischenraum des Kreislaufs aufweisen. Der Zwischenraum zwischen den Fenstern steht dann mit dem Zwischenraum zwischen den beiden Schaltern der Außenwand in Verbindung.

Der geschlossene Kreislauf zwischen der Wärmepumpe und dem Zwischenraum zwischen den Schalen der Außenwand gewährleistet einen guten Wirkungsgrad des Heizsystems. Dabei stellt sich in dem Zwischenraum eine bestimmte Lufttemperatur ein. Der Wirkungsgrad der Wärmerückgewinnung ist dann hoch, wenn die Außentemperatur wesentlich unter der Lufttemperatur in dem Zwischenraum liegt. Ist die Außentemperatur jedoch höher, hat die Wärmerückgewinnungsanlage keine eigentliche Funktion mehr. Vorteilhafterweise kann in diesem Fall in den sonst geschlossenen Kreislauf wärmere Außenluft eingeleitet und durch die Wärmepumpe zur Heizung verwendet werden. Der Kreislauf weist daher vorzugsweise thermostatgesteuerte Lüftungsklappen auf.

Der Erfindungsgedanke wird durch folgende Beschreibung näher erläutert, und es wird dabei auf die Fig. bezug genommen.

Fig. 1 zeigt schematisch anhand eines Gebäudequerschnitts Prinzip und Ausführung des Erfindungsgedankens.

Fig. 2 zeigt schematisch den Aufbau einer zweischaligen Wand und den beispielhaften Verlauf von Temperaturzuständen in den Schichten.

Fig. 3 zeigt schematisch Aufbau und Wirkungsweise eines in den Kreislauf integrierten Fensters.

Fig. 4 zeigt in isometrischer Darstellung zwei Wärmedämmkörper in Fertigbauweise.

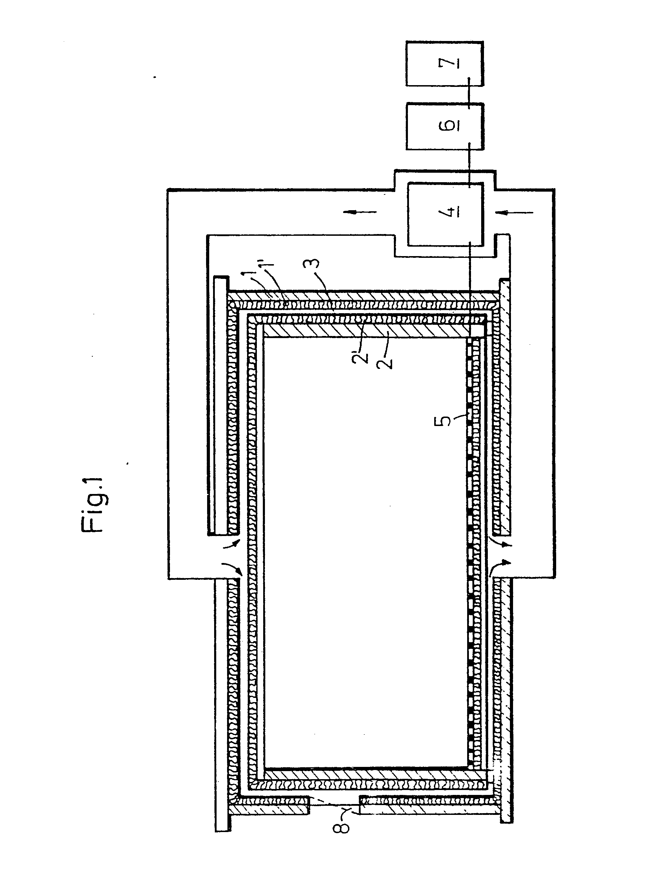

Gemäß Fig. 1 ist auf einer Außenschale 1 eine Wärmedämmschicht 1' und auf einer Innenschale 2 eine Wärmedämmschicht 2' angeordnet, wobei zwischen den beiden Dämmschichten ein Zwischenraum 3 (Luftkanal) vorhanden ist. Dieser Luftzwischenraum bzw. die darin befindliche Luft wird als Wärmeträgermedium für eine Wärmepumpe 4 benutzt. Diesem Wärmeträger wird durch die Wärmepumpe 4 in bekannter Weise Wärme entzogen. Die Wärmepumpe 4 kann dabei in einem beheizten Raum, im Keller, auf dem Dach oder außerhalb des Gebäudes montiert werden. Die durch die Wärmepumpe abgekühlte Luft wird in den Zwischenraum 3 geführt. Durch die von der Innenschale 2 nach außen abgegebene Wärmemenge wird die im Zwischenraum 3 befindliche Luft aufgeheizt und erneut der Wärmepumpe 4 zugeführt. Durch die Wärmepumpe 4 wird dann wiederum eine konventionelle Fußbodenheizung 5 oder eine nicht dargestellte Warmluft- oder Warmwasserheizung mit höherer Temperatur beschickt. Durch die Isolierung der Außenschale treten durch den geringen Temperaturunterschied nach außen nur geringe Energieverluste auf. Diese Verluste können durch die Antriebsenergie der Wärmepumpe 4, die auch in Wärmeenergie umgewandelt wird, voll ausgeglichen werden. Da bei dem vorliegenden Heizsystem in den meisten Tagen der Heizperiode genügend Überschußwärme produziert wird, kann diese Überschußwärme in an sich bekannter Weise in einem Wärmereservoir 6 für die Versorgung z. B. eines Brauchwasserspeichers 7 gespeichert werden. Das Reservoir 6 ermöglicht des weiteren die Entnahme von Wärmeenergie für die Bereitstellung von Wärmemengen bei kurzfristigen ungünstigen Betriebsbedingungen der Wärmepumpe. In der Außenschale 1 sind Lüftungsklappen 8 vorgesehen, die über eine Thermostatregelung dann geöffnet werden, wenn die Außentemperatur erheblich über der im Zwischenraum 3 befindlichen Luft liegt, so daß durch die Öffnungen die abgekühlte Luft ins Freie gelangt und die wärmere Außenluft in den Wärmepumpenkreislauf gelangen kann.

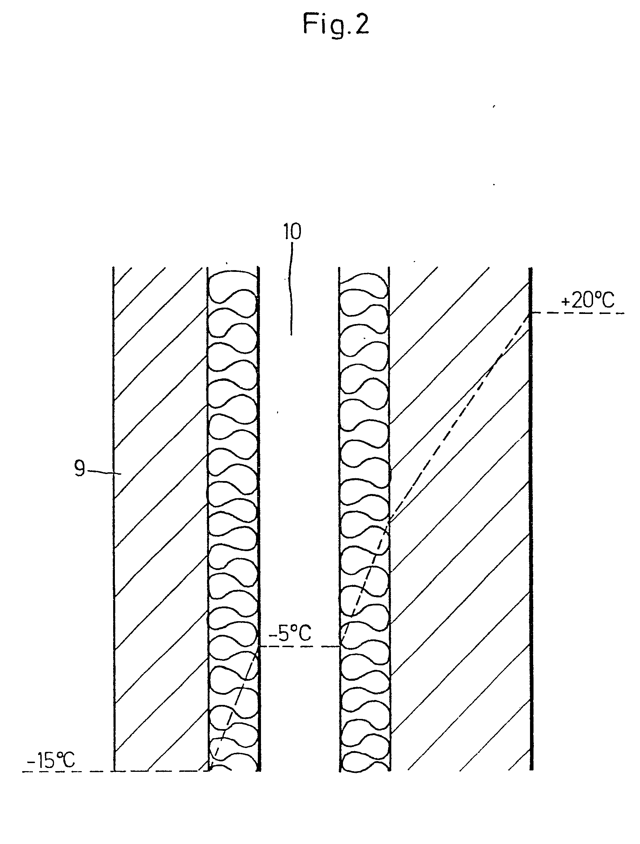

Fig. 2 zeigt ein Ausführungsbeispiel der zweischaligen Wand, wobei zusätzlich angenommene Temperatursprünge von der Außenschale 9 bis zum Innenraum eingezeichnet sind. Anhand dieses Beispiels wird deutlich, daß gegenüber der üblichen Sandwichbauweise die durch die hohen Temperaturunterschiede zwischen Außen- und Innenschale auftretenden Wärmeflüsse gemäß der im Luftzwischenraum 10 befindlichen und an der Wärmepumpe einstellbaren Wärmeträgertemperatur auf einen geringen Betrag reduziert werden mepumpe einstellbaren Wärmeträgertemperatur auf einen geringen Betrag reduziert werden können.

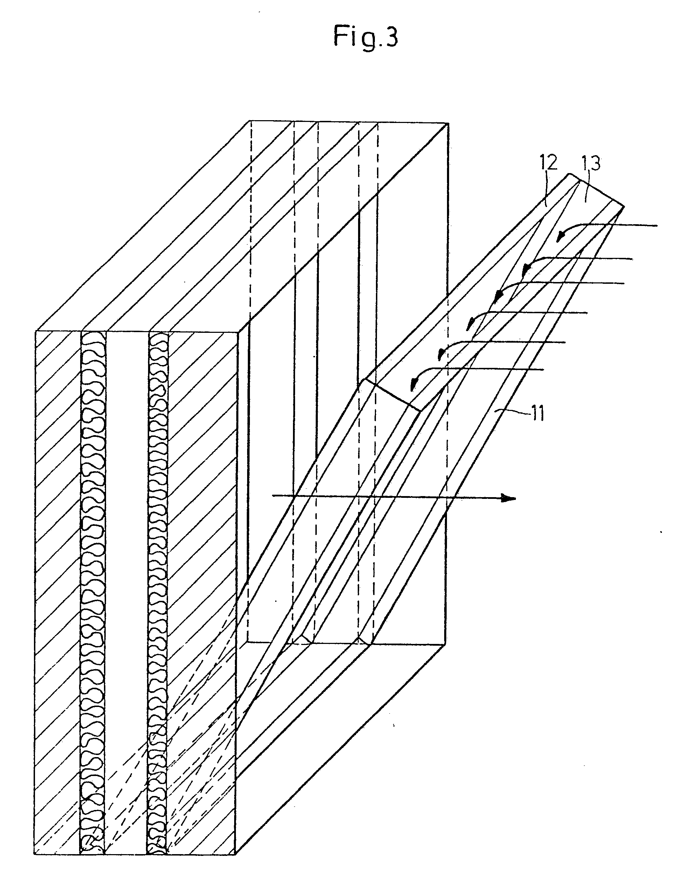

In Fig. 3 ist das Prinzip des Wärmeflusses innerhalb eines in den Wärmekreislauf integrierten Fensters dargestellt. Das Fenster besteht aus zwei kompletten Isolierglasfenstern 11 und 12, die zu einem Rechteck geformt, an den Seiten geschlossen und oben und unten für den Luftdurchlaß geöffnet sind. Diese Anordnung des Fensters besitzt den Vorteil, daß die von innen nach außen strömende Warmluft in den Luftzwischenraum 13 angesaugt wird und somit die im Wärmepumpenkreislauf befindliche Luft weiter aufwärmt.

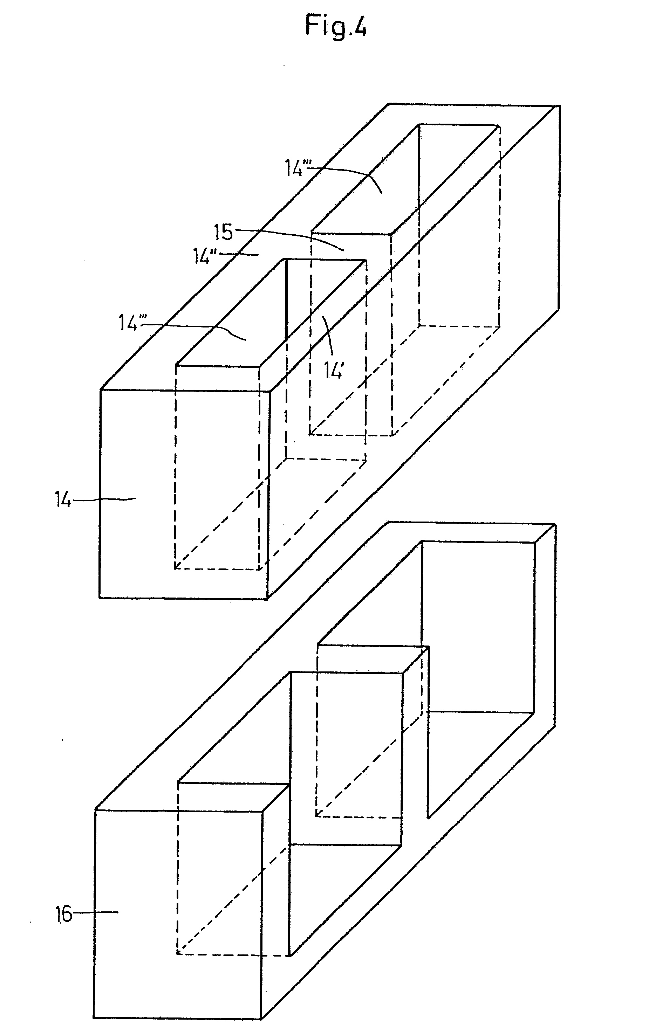

In Fig. 4 sind Vorrichtungsgegenstände für die Ausführung des Erfindungsgedankens wiedergegeben. Es handelt sich dabei um einen aus Schaumstoff bestehenden Wärmedämmkörper 14, der mit einer inneren und äußeren Wärmedämmschicht 14' bzw. 14'' versehen ist und in der Mitte der für den Luftdurchlaß erforderlichen Zwischenraum (Lüftungsquerschnitt) 14''' aufweist. Der Steg 15 dient zur Versteifung des relativ großformatigen Wärmedämmkörpers. Diese modularen Bauelemente können in einfacher Weise während der Bauausführung zwischen den Schalen aufeinander gesetzt werden. Für die rechtwinklige Luftführung ist ein ebenfalls modulares Element 16 entwickelt, das den Übergang von horizontaler in die vertikale Luftführung bzw. umgekehrt ermöglicht. Diese Wärmedämmkörper können nicht nur zwischen den Schalen, sondern auch unter dem Fußboden und unter dem Dach verlegt werden. Damit ist innerhalb des Wärmepumpenkreislaufs eine einwandfreie Luftführung gewährleistet.

Als besonders fortschrittlich erweist sich die Erfindung bei der Altbausanierung. Werden nämlich in einem definierten Abstand um den Altbau Wärmedämmkörper nach der vorliegenden Erfindung montiert, so läßt sich das gleiche Heizsystemprinzip in Verbindung mit einer Luft-Luft- oder Luft-Wasser-Wärmepumpe anwenden.

## Patentansprüche

1. Wärmerückgewinnungsanlage für Gebäude mit einem durch zwei Schalen (1, 2) einer Außenwand bzw. eines Dachaufbaus gebildeten Zwischenraum (3), der über eine Luftzuführleitung mit dem Verdampfer einer Wärmepumpe (4) in Verbindung steht, wobei eine Luftausgangsleitung vom Verdampfer der Wärmepumpe (4) in dem Zwischenraum (3) zurückführt und zwischen Verdampfer und Zwischenraum (3) ein geschlossener Kreislauf besteht, dadurch gekennzeichnet, daß auf die Außenschale (1) eine erste, zur Innenschale (2) zeigende Wärmedämmschicht (1') und auf die Innenschale (2) eine zweite, zur Außenschale (1) zeigende Wärmedämmschicht (2') aufgebracht ist.

2. Wärmerückgewinnungsanlage nach Anspruch 1, dadurch gekennzeichnet, daß als Wärmedämmschicht aus Schaumstoff vorgefertigte Wärmedämmkörper (14) vorgesehen sind, die eine innere und äußere Wärmedämmschicht (14', 14'') und einen Lüftungsquerschnitt (14''') für die Luftführung besitzen.

3. Wärmerückgewinnungsanlage nach Anspruch 1, dadurch gekennzeichnet, daß in den Kreislauf Fenster integriert sind, die jeweils aus zwei einzelnen gleichartigen Isolierglasfenstern (11, 12) bestehen und ein an den Seiten geschlossenes Rechteck bilden und dessen Luftzwischenraum (13) einen ähnlichen Querschnitt wie der Zwischenraum (3) des Kreislaufs aufweist.

4. Wärmerückgewinnungsanlage nach Anspruch 1, dadurch gekennzeichnet, daß in dem Kreislauf thermostatgesteuerte Lüftungsklappen (8) enthalten sind, die bei höherer Außentemperatur gegenüber der Temperatur im Kreislauf geöffnet werden, so daß wärmere Außenluft in den kälteren Kreislauf einfließen kann.

## Claims

1. Heat recovery arrangement for buildings having a space (3) formed by two shells (1, 2) of an outer wall or of a roof construction, respectively, which space (3) is connected with an evaporator of a heat pump (4) through an air fedding conduit, the outlet conduit of said evaporator of said heat pump (4) leading back to said space (3) and a closed circuit existing between said evaporator and said space (3), characterized in that the outer shell (1) is provided with a first heat insulating layer (1') directed to the inner shell (2) and that said inner shell (2) is provided with a second heat insulating layer (2') directed to said outer shell (1).

2. Heat recovery arrangement according to claim 1, characterized in that the heat insulating layer is formed by heat insulating bodies (14) made from foamed plastics, which have an inner and an outer insulating layer (14', 14'') and a ventilation duct (14''') for guiding the air.

3. Heat recovery arrangement according to claim 1, characterized in that windows are integrated into the closed circuit, which consist of two separate and similar insulating glass windows (11, 12) form a closed rectangle at their sides, and have an intermediate air space (13) having a similar cross-section as the space (3) in the closed circuit.

4. Heat recovery arrangement according to claim 1, characterized in that thermostatically controlled ventilation flaps (8) are provided in the closed circuit, which are opened, when the ambient temperature is higher than the temperature within the closed circuit (3) so that ambient air with a higher temperature can enter into the closed circuit with a lower temperature.

## Revendications

1. Dispositif récupérateur de chaleur pour une construction comportant un espace intermédiaire (3) entre deux parois (1, 2) d'un mur extérieur ou d'une structure de toit, lequel est en liaison avec l'évaporateur d'une pompe à chaleur (4) par l'intermédiaire d'une conduite d'alimentation d'air, où une conduite d'évacuation d'air retourne de l'évaporateur de la pompe à chaleur (4) dans l'espace intermédiaire (3) et forme un circuit fermé entre l'évaporateur et l'espace intermédiaire (3) caractérisé en ce qu'une première couche calorifuge (1') tournée vers la paroi interne (2) est montée sur la paroi externe (1) et une seconde couche calorifuge (2') tournée vers la paroi externe (1) est montée sur la paroi interne (2).

2. Dispositif récupérateur de chaleur selon la revendication 1 caractérisé en ce que des solides calorifuges (14) préfabriqués en matériau alvéolaire sont prévus en tant que couche calorifuge, lesquels comportent une couche calorifuge interne et externe (14', 14'') et une section de passage d'air (14''') pour le guidage de l'air.

3. Dispositif récupérateur de chaleur selon la revendication 1 caractérisé en ce que des fenêtres sont intégrées dans le circuit, lesquelles comprennent chacune deux fenêtres similaires séparées en verre isolant (11, 12) et forment un rectangle fermé sur les côtés et dont l'espace d'air intermédiaire (13) présente une section semblable à l'espace intermédiaire (3) du circuit.

4. Dispositif récupérateur de chaleur selon la revendication 1 caractérisé en ce que des clapets d'aération (8) commandés thermostatiquement sont disposés dans le circuit, lesquels s'ouvrent lorsque la température extérieure est supérieure à la température dans le circuit de sorte que de l'air extérieur plus chaud puisse s'écouler dans le circuit plus froid.

# Fig.1

# Fig.2

# Fig.3

# Fig.4

14'''

15

14''

14''''

14'

14

16